(19) Europäisches Patentamt

European Patent Office

Office européen des brevets

(11) **EP 0 971 349 A2**

(12) **EUROPEAN PATENT APPLICATION**

(43) Date of publication:
**12.01.2000 Bulletin 2000/02**

(51) Int. Cl.$^7$: **G11B 19/04**, G11B 20/12, G11B 20/00, G11B 27/02, H04N 5/76

(21) Application number: **99111991.8**

(22) Date of filing: **29.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.07.1998 JP 18852298**

(71) Applicant: **Hitachi, Ltd.**
**Chiyoda-ku, Tokyo 101-8010 (JP)**

(72) Inventors:
• **Kageyama, Masahiro**
**Tokyo 192-0904 (JP)**

• **Tanabe, Hisao**
**Tokyo 192-0043 (JP)**
• **Suzuki, Tatsundo**
**Tokyo 208-0013 (JP)**
• **Ito, Tamotsu**
**Kanagawa-ken 252-1114 (JP)**

(74) Representative:
**Beetz & Partner**
**Patentanwälte**
**Steinsdorfstrasse 10**
**80538 München (DE)**

(54) **Data recording method and data recording apparatus**

(57)   When image data or the like is recorded by using a conventional control program which now becomes available, we encounter a problem that the image reproduction is abruptly broken. In order to solve the problem, the present invention proposes a method in which immediately after the recording operation is started, a recording medium is searched to find a vacant region of which length is too short to carry out seamless recording (vacant region having a length shorter than the minimum recording length) and the region is set to a recording prohibiting region, and thereafter data recording is carried out in a general manner. As a method of setting the vacant region to the recording prohibiting region, there is proposed one in which the vacant region on the recording medium is attached with information indicating that the region has been already occupied. Alternatively, the region may be regarded as a defect region and the region is registered in a defect register region of the recording medium.

**FIG. 3**

EP 0 971 349 A2

**Description**

BACKGROUND OF THE INVENTION

The present invention relates to a data recording method and a data recording apparatus, and more particularly to a data recording method and a data recording apparatus suitable for use for recording time-sequential data on a rewritable recording medium.

Much effort has been concentrated on development in a method in which image data or audio data are recorded on and reproduced from a rewritable recording medium such as an optical disk or a magneto-optical disk. In the following description, continuous reproduction in which temporally continuous reproduction is maintained is referred to as seamless reproduction and recording for realizing the seamless reproduction is referred to as seamless recording.

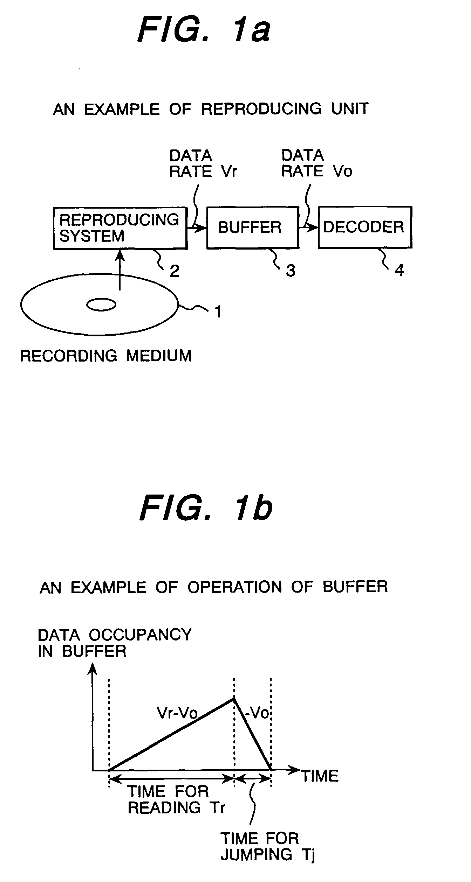

In general, since a recording and reproducing apparatus utilizing a photoelectric or photomagnetic phenomenon is equipped with a pickup having a considerable inertia, there is a tendency that the access speed for accessing target data becomes relatively slow. FIGs. 1(a) and 1(b) show a prior art in which the seamless reproduction is carried out by using a recording medium causing relatively slow data access speed. Initially, as shown in the diagram shown in FIG. 1(a), data read from a recording medium 1 through a reproducing system 2 is supplied to a buffer 3 at a data reading rate of Vr. Conversely, when data is read out from the buffer 3, the data is read out at a data reproducing rate of Vo to a decoder 4 which is based on the MPEG (Motion Picture Experts Group) system (reference can be made to ISO/IEC11172 standard, ISO/IEC13818 standard or the like). In this case, the data reproducing rate Vo is a rate that the data inherently possesses, and the data reproducing rate can be calculated from a data length and time information within the data (such as System Clock Reference, Presentation Time Stamp or the like). At this time, as shown in a diagram shown in FIG. 1(b), when data is actually read out from the recording medium during the time period (Tr), the data occupancy within the buffer is increased at a rate of (Vr-Vo) while when data reading is stopped during the time period (Tj) such as when the pickup jumps over the recording medium (seek time + rotation waiting time and so on), the data occupancy within the buffer is decreased at a rate of -Vo. If the next reading operation is started before the buffer becomes empty, the reproducing operation is continued without interruption and the seamless reproduction can be realized.

It is found from FIG. 1(b) that a condition of $(Vr-Vo)*Tr - Vo*Tj \geqq 0$ is requested for preventing the buffer from becoming empty. The time for reading (Tr) can be expressed with data rates determined based on the standard Vr and Vo and the time for jumping Tj, as $Tr \geqq (Vo/(Vr-Vo))*Tj$. Therefore, if data is read out at the rate of Vr from the recording medium during the time duration Tr, then data amount equal to or larger than (Vr*Tr) shall be written on a region of the recording medium having substantially continuing addresses. The data length necessary for writing data continuously in terms of physical meaning is hereinafter referred to as minimum recording length. For example, if it is supposed that the maximum time for jumping Tj is 1 sec. And Vr = 11 Mbps (megabit per second), Vo = 8 Mbps at maximum, the minimum recording length D is given as $D \geqq Vr*Tr \geqq (Vr*Vo/(Vr-Vo))*Tj = (11*8/(11-8))*1 = 29.3 \text{ Mbit} = 3.7 \text{ MB (megabyte)}$. That is, a vacant region of which capacity is equal to or larger than 3.7 MB is selectively utilized for recording. The term "physically substantially continuous" means that the recording region of the recording medium can be regarded to be continuous except for a minute defect region too small to record data.

BRIEF SUMMARY OF THE INVENTION

There has been proposed a technology by one of the inventors of the present invention et al. in which the above-described first prior art is developed to improve the efficiency of the medium utilization on an rewritable recording medium such as a DVD-RAM or the like. The proposed method employs as a recording and reproducing system for the DVD-RAM recording medium, the ZCLV (Zoned Constant Linear Velocity) system in which, by utilizing the fact that the time for jumping Tj becomes small when the pickup carries out intra-zone jump while the time for jumping Tj becomes large when the pickup carries out inter-zone jump, data recording is carried out on a recording region of which length is equal to or larger than the relatively small first minimum recording length soon before the pickup carries out the intra-zone jump while data recording is carried out on a recording region of which length is equal to or larger than the relatively large second minimum recording length soon before the pickup carries out the inter-zone jump. Although recording was carried out only on the recording region having the relatively large second minimum recording length in the prior art, according to the above-method, recording can be carried out not only on the recording region having the second minimum recording length but the recording region having the relatively short first minimum recording length, with the result that utilizing efficiency of the recording medium will be improved.

The DVD-RAM has a logical file structure on the recording medium based on the ISO/IEC13346 standard, enabling data to be shared with a PC (Personal Computer). That is, data can be recorded, edited, erased and so on by the PC.

In general, when the PC searches the recording medium for an address in accordance with a control software, the PC carries out the search in ascending order to find a vacant region and records data on it. When the PC carries out the search to find a vacant region, the PC uses vacant region information (space bitmap descriptor or the like mentioned in the ISO/IEC13346 standard) recorded on the recording medium. At this time, as described above, recording is carried out not in such a manner that the vacant region having a recording length equal to or longer than the minimum recording length is selectively utilized but in such a manner that vacant regions including a small one are all utilized. A control software utilizing the general recording method as set forth above has become available.

If image data or the like is recorded based on the general recording method, the recording condition does not satisfy the condition of the minimum recording length that is indispensable for the seamless reproduction. Therefore, when the pickup jumps with a large stride, the buffer becomes empty, causing interruption in image reproduction.

Therefore, an object of the present invention is to propose a data recording method and a data recording apparatus in which the seamless reproduction can be effected without adding any modification to a conventional control software which carries out recording, reproduction, erasing and so on in a general manner.

Soon after the data recording apparatus starts the recording operation, the data recording apparatus searches the recording medium for a vacant region not suitable for the seamless recording (vacant region having a length shorter than the minimum recording length). The data recording apparatus sets the region to a recording prohibiting region and thereafter carries out data recording in a general manner.

As a manner for setting the region to the recording prohibiting region, one of possible ways is that information indicating that the region has been already occupied is recorded on the vacant region. Alternatively, the region may be regarded as a defect region and information that the region is a defect region may be registered in a defect management area.

After data is recorded, if the region set to the recording prohibiting region is again set to a vacant region, the vacant region can be utilized for recording data which is not requested to be reproduced in the seamless fashion.

Further objects and advantages of the present invention will be apparent from the following description which is given with reference to the accompanying drawings wherein preferred embodiments of the present invention is clearly shown.

BRIEF DESCRIPTION OF THE SEVERAL VIEWS OF THE DRAWINGS

FIGs. 1(a) and 1(b) are diagrams useful for explaining the operation of a prior art;
FIG. 2 is a diagram useful for explaining the operation of an embodiment according to the present invention;
FIG. 3 is a diagram useful for explaining the operation of the embodiment according to the present invention;
FIGs. 4(a) and 4(b) are diagrams useful for explaining the operation of the embodiment according to the present invention;
FIG. 5 is a diagram useful for explaining the arrangement the an embodiment according to the present invention;
FIG. 6 is a diagram useful for explaining the operation of the embodiment according to the present invention;
FIG. 7 is a diagram useful for explaining the operation of the embodiment according to the present invention;
FIGs. 8(a) and 8(b) are diagrams useful for explaining the operation of the embodiment according to the present invention;
FIG. 9 is a diagram useful for explaining the operation of an embodiment according to the present invention; and
FIG. 10 is a diagram useful for explaining the operation of the embodiment according to the present invention;

DETAILED DESCRIPTION OF THE INVENTION

Embodiments of the present invention will hereinafter be described with reference to the drawings.

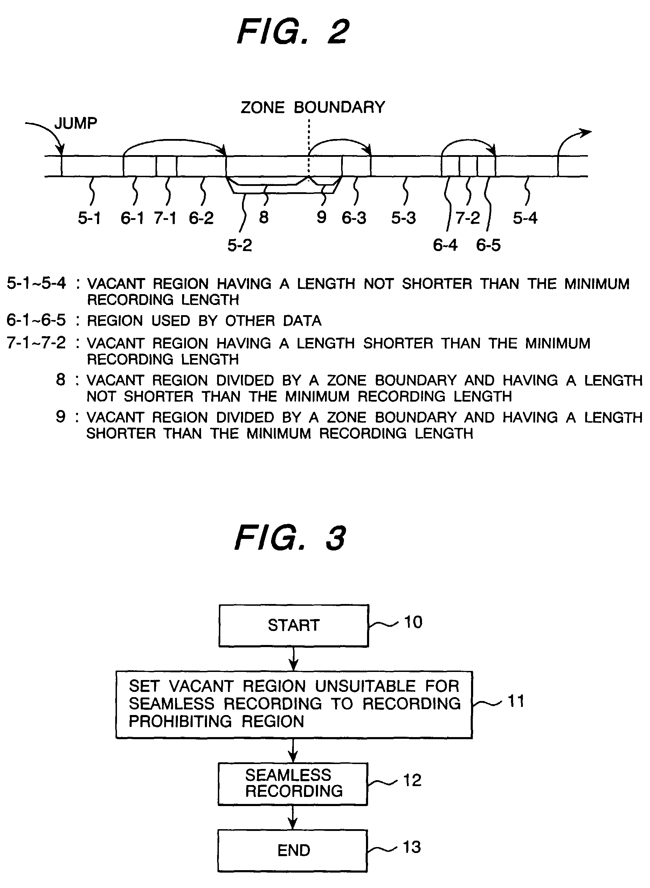

A first embodiment of the present invention will be described with reference to FIG. 2. FIG. 2 is a diagram useful for describing a region of a recording medium and recording operation when the recording medium is partitioned into a number of zones based on the ZCLV system such as a DVD-RAM or the like. As shown in FIG. 2, vacant regions are classified into a vacant region 5 having a length equal to or longer than the minimum recording length, a vacant region 7 having a length shorter than the minimum recording length, a vacant region 8 divided by a zone boundary and having a length equal to or longer than the minimum recording length, a vacant region 9 divided by the zone boundary and having a length shorter than the minimum recording length. If data is recorded on only the vacant regions 5 and 8 having a length equal to or longer than the minimum recording length, the seamless reproduction can be carried out.

FIG. 3 is a diagram useful for explaining an operation for realizing the recording shown with FIG. 2 by using an available control software for effecting a general recording operation. As shown in FIG. 3, soon after the data recording apparatus started the recording operation (step 10), the data recording apparatus searches the recording medium for a vacant region unsuitable for the seamless recording, or the vacant regions 7 and 9 having a length less than the minimum recording length shown in FIG. 2, by using a manner which will be described later on. Then, the data recording apparatus sets the region to a recording prohibiting region (step 11). For example, if information indicating that the region has been already occupied is recorded on a vacant region information (such as a space bitmap descriptor mentioned in the ISO/IEC13346 standard) on the recording medium, the region can be prevented from being used for recording data. Alternatively, if the region is regarded as a defect region and information of the region is registered in a defect management area on the recording medium, also the region can be prevented from being used for recording data. In this way, after the vacant regions having a length shorter than the minimum recording length are all set to the recording prohibiting region, and ordinary recording operation is carried out in a general manner (step 12) to complete the recording operation (step 13), then the seamless recording can be realized.

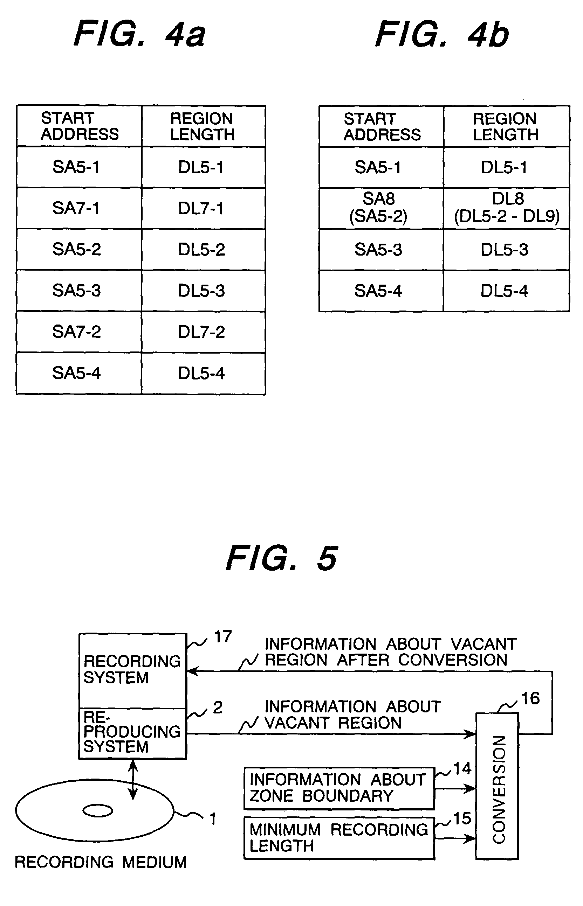

FIG. 4(a) shows a result of recording on the vacant regions shown in FIG. 2 by using a general recording method and FIG. 4(b) is a result of recording on the vacant regions shown in FIG. 2 by using the method shown in FIG. 3. According to the method of the diagram shown in FIG. 4(a), since all vacant regions are utilized for recording the data, after recording is carried out on a region length DL5-1 continuously from a start address SA5-1 corresponding to a region 5-1, recording is carried out on a region length DL7-1 continuously from a start address SA7-1 corresponding to a region 7-1. In a similar fashion, information is continuously recorded on region lengths DL and start addresses SA until recording region reaches a region 5-4.

Conversely, according to the method shown in FIG. 4(b), vacant regions having a length shorter than the minimum recording length are set to a recording prohibiting region in advance. Therefore, such regions are skipped upon recording data. That is, for example, after data is recorded on the region length DL5-1 of the start address SA5-1 corresponding to the region 5-1 shown in FIG. 2, then data is recorded on a region length DL8 of a start address SA8 corresponding to a region 8.

FIG. 5 shows an example of an arrangement of an apparatus for searching the recording medium for a vacant region having a length shorter than the minimum recording length.

As shown in FIG. 5, vacant region information recorded on the recording medium 1 is read out by a reproducing system 2 and supplied to converting means 16. On the other hand, address information 14 of a zone boundary regulated by a physical standard of a recording medium and a minimum recording length D 15 calculated by the above-described conditioning equation, $D \geqq Vr*Tr \doteqdot (Vr*Vo/(Vr-Vo))*Tj$ , from the maximum time for jumping Tj, the data rate Vr and Vo, are supplied to the converting means 16. The converting means 16 divides the vacant region based on the zone boundary information 14 and thereafter converts the attribute of the vacant region having a length shorter than the minimum recording length into an attribute of a recording prohibiting region (such as a region on which data has been already recorded). Then, data is recorded on the recording medium 1 by a recording system 17.

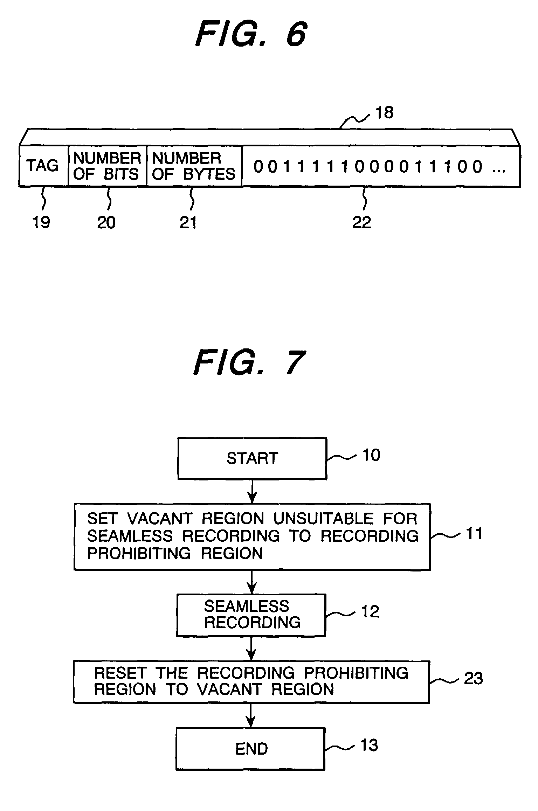

FIG. 6 is a diagram showing an example of a vacant region information (space bitmap descriptor) mentioned in the ISO/IEC13346 standard. The vacant region information 18 is composed of a tag 19, a number of bits 20, a number of bytes 21 and a bit map 22. The tag 19 is useful for indicating that the following information is information concerning the vacant region. The number of bits 19 and the number of bytes 21 indicate how many bits and bytes the bit map 22 is composed of, respectively. Each bit of the bit map 22 corresponds to a recording unit region on the recording medium, and the values of 0 and 1 of each bit correspond to a region on which no data is recorded yet and a region on which data has been recorded, respectively. The recording unit region corresponds to a logical block corresponding to a unit of sector composed of 2048 bytes, for example. The number of bits of 1 counts the continuous number, and the number multiplied with the size of the recording unit region (e.g., 2048 bytes) yields the size of the vacant region. The converting means 16 compares the size of the vacant region with the minimum recording length, and converts the bit corresponding to the vacant region having a length shorter than the minimum recording length into "0" (which indicates that data has been already recorded on the region), whereby the region can be made into the recording prohibiting region.

FIG. 7 is a diagram showing a method in which the method shown in FIG. 6 is further developed to convert the recording prohibiting region again into a recording allowable region. According to the method shown in FIG. 7, initially, after the recording operation is started (step 10), a vacant region unsuitable for the seamless recording is set to the recording prohibiting region (step 11) and recording is carried out (step 12). Before the process has been completed (step 13), the region which has been set to the recording prohibiting region is again set to a vacant region (step 23). Thus, data (such as management information, still image information or the like) which is not requested to be reproduced in a seamless fashion, can be recorded on the vacant region.

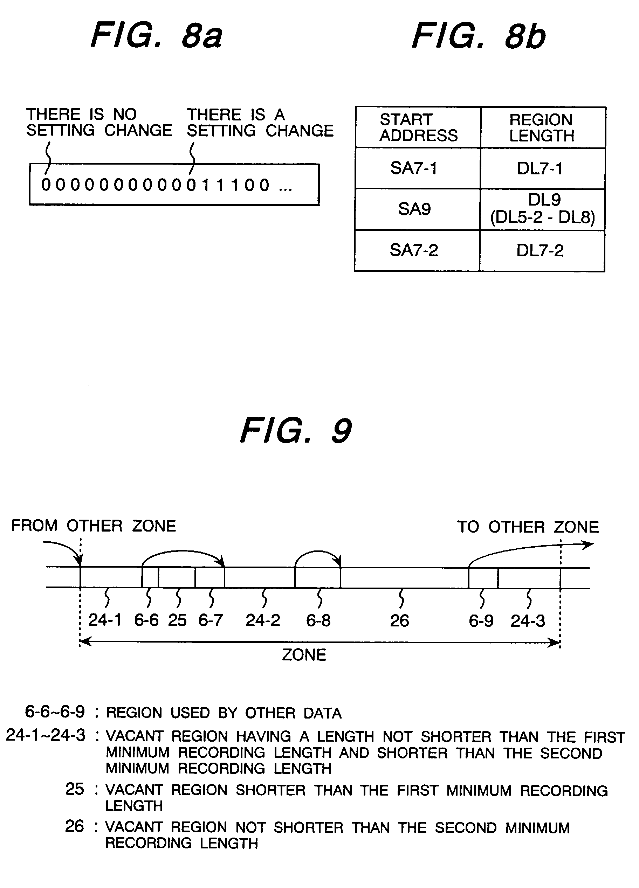

FIGs. 8(a) and 8(b) show a method for carrying out the resetting shown in the step 23 of FIG. 7. As shown at a diagram shown in FIG. 8(a), a bit map in which each pit corresponds to the recording unit region on the recording medium is generated in a manner similar to that of the bit map 22 shown in FIG. 6. Each bit may be initialized to be "0", for example. A bit corresponding to the recording unit region, which has been set to the recording prohibiting region (step 11) of the recording method shown in FIG. 7, is changed into "1". After data is recorded (step 12), this bit map and the bit map 22 on the recording medium shown in FIG. 6 are ORed to create a new bit map 22. Thus, the bit corresponding to the recording unit region which has been set to the recording prohibiting region can be returned to "1" (indicating that no data is recorded on the region). Further, when the vacant region unsuitable for seamless recording is set to the recording prohibiting region (step 11), if a modified reference table of start addresses SA and region lengths DL is created as shown in FIG. 8(b) and a bit of position corresponding to the reference table soon before the process is completed (step 13), the same result will be certainly obtained. Further, it is also obvious that the reference table shown in FIG. 8(b) derives from the difference between the reference tables shown in FIGs. 4(a) and 4(b).

A second embodiment of the present invention will be described with reference to FIG. 9. Initially, the first minimum recording length D1 is calculated from the maximum value Tj1 of the intra-zone time for jumping based on the conditional equation; $D1 \geqq Vr*Tr1 \geqq (Vr*Vo/(Vr-Vo))*Tj1$ . Then, the second minimum recording length D2 is calculated from the maximum value Tj2 of the inter-zone time for jumping based on the conditional equation; $D2 \geqq Vr*Tr2 \geqq (Vr*Vo/(Vr-Vo))*Tj2$ . Soon before the pickup carries out the inter-zone jump, the pickup records data on a vacant region having a length equal to or longer than the second minimum recording length D2 while soon before the pickup carries out the intra-zone jump, the pickup records data on a vacant region having a length equal to or longer than the first minimum recording length D1, whereby the recording operation can be controlled to guarantee the seamless reproduction.

As shown in FIG. 9, if a general recording method is employed, all vacant regions 24, 25 and 26 will be utilized for recording. However, according to the method of the second embodiment, the vacant regions 25 and 24-3 are set to the recording prohibiting region at the step 11 shown in FIGS. 3 and 7. Thus, the seamless recording can be realized.

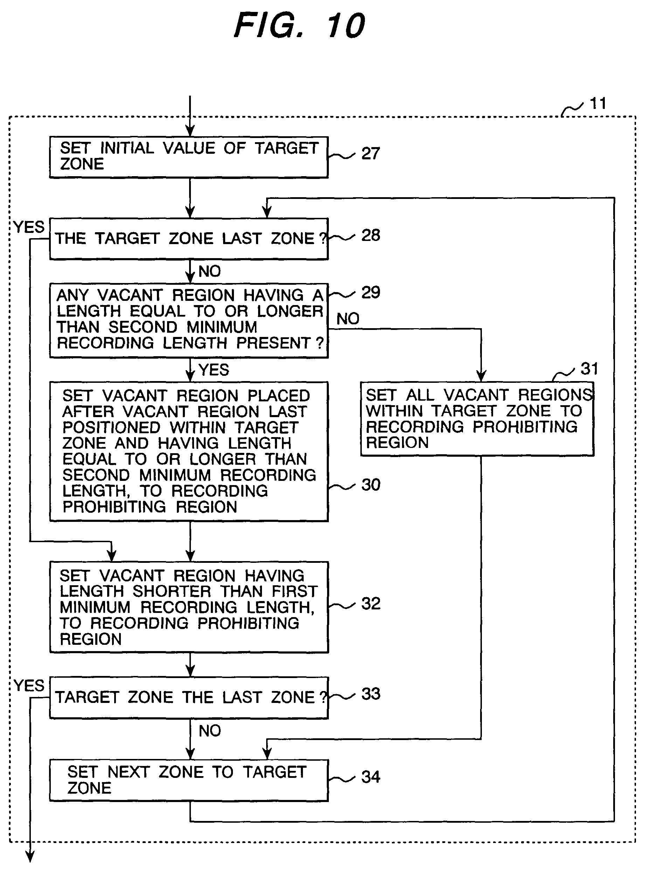

The above method will be more concretely described with reference to FIG. 10. That is, the vacant region unsuitable for the seamless recording is set to the recording prohibiting region at the step 11. As shown in FIG. 10, initially, target zones to be subjected to the processing are initialized at step 27 and then the processing proceeds to step 28. At this time, any value can be selected for the initialized value. For example, the zone innermost placed on the recording medium may be selected for the target zone.

At step 28, each of zones on the recording medium is processed as a target zone in order, and it is determined whether the left zone is the last zone or not. If it is determined that the left zone is the last zone, then the processing proceeds to step 32. If it is determined that the left zone is not the last zone, the processing proceeds to step 29. For example, if zones are processed from the innermost zone to the outside in order, the outermost zone becomes the last zone.

At step 29, it is determined whether or not there is a vacant region having a length longer than the second minimum recording length within the target zone. If it is determined that there is such a vacant region, the processing proceeds to step 30 while if it is determined that there is no such region, the processing proceeds to step 31.

At step 30, a vacant region placed after the vacant region which is last positioned within the target zone (i.e., having the largest start address) and has a length equal to or longer than the second minimum recording length, is set to the recording prohibiting region. Then, processing proceeds to step 32. Owing to the process of step 30, it is possible to control such that soon before the pickup jumps to the next zone, data is necessarily recorded on the vacant region having a length equal to or longer than the second minimum recording length. For example, the region 26 shown in FIG. 9 corresponds to the vacant region which is last placed within the target zone and has a length equal to or longer than the second minimum recording length, and the region 24-3 is the region set to the recording prohibiting region at this time.

At step 31, all vacant regions within the target zone are set to the recording prohibiting region so that data is prevented from being recorded on the zone. Then, the processing proceeds to step 34. The reason why the all vacant regions are made into the recording prohibiting region is that since there is no region having a length equal to or longer than the second minimum recording length, if this zone is utilized for recording data, the seamless reproduction will not be guaranteed upon jumping to the next zone.

At step 32, a vacant region having a length shorter than the first minimum recording length is set to the recording prohibiting region, and then processing proceeds to step 33. For example, the region 25 shown in FIG. 9 corresponds to the vacant region set to the recording prohibiting region at this time.

At step 33, it is determined again whether the target zone is the last zone or not. If it is determined that the target zone is the last zone, the setting routine 11 is completed. It is determined that the target zone is not the last zone, then processing proceeds to step 34.

At step 34, the next zone is set to the target zone and processing proceeds to step 28. At this time, any zone that has not been set to the target zone can be selected to the target zone. For example, the outside zone next to the current zone may be set to the next target zone.

According to the above method, vacant regions can be set to the recording prohibiting region in accordance with the setting routine 11 shown in FIG. 9, with the result that the seamless recording can be realized.

Although the present invention has been described with an example in which the DVD-RAM is employed as the recording medium, the present invention is not limited to the mode of the example. For example, if data is recorded on the recording medium not based on the ZCLV but based on a CLV (Constant Linear Velocity) system such as a DVD-RW, the whole recording medium can be regarded as a single zone. Thus, the above-described method can be directly applied thereto. Further, if the data rate Vr and Vo are not constant but can change instantaneously, the present invention can also be directly applied thereto so long as the minimum value of Vr is set to new Vr and the maximum value of Vo is set to new Vo. It is obvious that the present invention can be applied to other cases in which seamless recording and reproduction is carried out using a general recording medium.

According to the present invention, it is possible to carry out data recording in the mode of seamless reproduction (temporally continuous reproduction without any interruption) without adding any modification to a conventional control software useful for carrying out recording, reproduction, erasing or the like in a general manner.

Although several embodiments have been described above, these embodiments are merely illustrative and not restrictive. Therefore, it is apparent to those skilled in the art that various changes and modifications can be effected without departing from the spirit and scope of the invention, and thus these changes or modifications should be embraced within the spirit and scope of the claims appended hereto.

## Claims

1. Data recording method for use with a recording medium in which a physically substantially continuous recording allowable region is set to as a vacant region, comprising:

   a first step of searching the recording medium for the vacant region of which capacity is smaller than a capacity large enough to store a data amount for maintaining temporally continuous reproduction; and
   a second step of setting the vacant region found by the searching to a recording prohibiting region and thereafter recording data on the recording medium.

2. A data recording method according to claim 1, further comprising a third step of resetting the vacant region that has been set to the recording prohibiting region at the second step, to a recording allowable region.

3. A data recording method according to claim 1, wherein if the maximum value of time necessary to access data recorded on the recording medium is defined as a time for jumping, the data recording amount enabling data to be reproduced in a temporally continuous fashion, is determined based on the time for jumping, the data reading rate at which the data is read from the recording medium, and the data reproducing rate inherent in the data.

4. A data recording method according to claim 1, wherein the setting operation of the recording prohibiting region is carried out in such a manner that an indication that the searched vacant region has been already occupied is recorded in a vacant region information of the recording medium.

5. A data recording method according to claim 1, wherein the setting operation of the recording prohibiting region is carried out in such a manner that address information of the searched vacant region is registered in a defect register region of the recording medium.

6. A data recording method according to claim 1, wherein

   the vacant regions are spread over a plurality of zones; and
   if the maximum value of time necessary to access data without jumping over a boundary between the zones is defined as a first time for jumping while
   the maximum value of time necessary to access data with jumping over a boundary between the zones is defined as a second time for jumping, and
   if a first minimum recording length is defined as a data amount determined based on the first time for jumping, the data reading rate at which the data is read from the recording medium, and the data reproducing rate inherent in the data while
   a second minimum recording length is defined as a data amount determined based on the second time for jumping, the data reading rate, and the data reproducing rate,
   then a vacant region of which capacity smaller than a capacity large enough to store a data amount for maintaining temporally continuous reproduction is composed of a vacant region having a length shorter than the first minimum recording length and a vacant region placed after the last positioned vacant region within the zone and having a length equal to or longer than the second minimum recording length.

7. A data recording method according to claim 3, wherein the data amount D necessary for maintaining temporally continuous reproduction is a minimum value satisfying the following equation:

$$D \geqq (Vr*Vo/(Vr-Vo))*Tj$$

where D is the data amount necessary for maintaining temporally continuous reproduction, Tj is the time for jumping, Vr is the data reading rate and Vo is the data reproducing rate.

8. A data recording apparatus comprising:

a reproducing system for reading vacant region information recorded on a recording medium;
converting means for comparing the data amount necessary for maintaining temporally continuous reproduction with the capacity of the vacant region and converting the attribute of the vacant region of which capacity is smaller than the data amount into a recording prohibiting region; and
a recording system for recording information concerning the recording prohibiting region on the recording region.

9. A data recording apparatus according to claim 8, wherein the converting means again converts the attribute of the vacant region that has been converted into the recording prohibiting region into a vacant region.

10. A data recording apparatus according to claim 8 in which the maximum value of time necessary to access data recorded on the recording medium is defined as a time for jumping, wherein the converting means determines the data recording amount enabling data to be reproduced temporally continuously based on the time for jumping, the data reading rate at which the data is read from the recording medium, and the data reproducing rate inherent in the data.

11. A data recording apparatus according to claim 8, wherein the converting means changes the attribute of the vacant region of which capacity is smaller than the data amount into one indicating that data has been already recorded.

12. A data recording apparatus according to claim 8, wherein:

the converting means changes the attribute of the vacant region of which capacity is smaller than the data amount into one indicating that the region is a defect region, and
the recording system registers the address information of the vacant region of which attribute has been changed into one indicating that the region is a defect region, in a defect management area of the recording medium.

13. A data recording apparatus according to claim 8 wherein

the vacant regions are spread over a plurality of zones; and
if the maximum value of time necessary to access data without jumping a boundary between the zones is defined as a first time for jumping while
the maximum value of time necessary to access data with jumping a boundary between the zones is defined as a second time for jumping, and
if a first minimum recording length is defined as a data amount determined based on the first time for jumping, the data reading rate at which the data is read from the recording medium, and the data reproducing rate inherent in the data while
a second minimum recording length is defined as a data amount determined based on the second time for jumping, the data reading rate, and the data reproducing rate,
then the converting means converts the attribute of a vacant region smaller than the first minimum recording length and the attribute of a vacant region existing after the last placed vacant region within the zone that has a length equal to or longer than the second minimum recording length, into an attribute of a recording prohibiting region.

14. A data recording apparatus according to claim 10, wherein

the converting means calculates the data amount D necessary for maintaining temporally continuous reproduction from the minimum value satisfying the following equation:

$$D \geqq (Vr*Vo/(Vr-Vo))*Tj$$

where D is the data amount necessary for maintaining temporally continuous reproduction, Tj is the time for jumping, Vr is the data reading rate and Vo is the data reproducing rate.

# FIG. 1a

AN EXAMPLE OF REPRODUCING UNIT

DATA RATE Vr   DATA RATE Vo

REPRODUCING SYSTEM → BUFFER → DECODER

2   3   4

1

RECORDING MEDIUM

# FIG. 1b

AN EXAMPLE OF OPERATION OF BUFFER

DATA OCCUPANCY IN BUFFER

Vr-Vo   -Vo

TIME

TIME FOR READING Tr

TIME FOR JUMPING Tj

# FIG. 2

ZONE BOUNDARY

JUMP

5-1  6-1  7-1  6-2    8        9  6-3  5-3   7-2    5-4

5-2                               6-4  6-5

5-1~5-4 : VACANT REGION HAVING A LENGTH NOT SHORTER THAN THE MINIMUM
          RECORDING LENGTH

6-1~6-5 : REGION USED BY OTHER DATA

7-1~7-2 : VACANT REGION HAVING A LENGTH SHORTER THAN THE MINIMUM
          RECORDING LENGTH

      8 : VACANT REGION DIVIDED BY A ZONE BOUNDARY AND HAVING A LENGTH
          NOT SHORTER THAN THE MINIMUM RECORDING LENGTH

      9 : VACANT REGION DIVIDED BY A ZONE BOUNDARY AND HAVING A LENGTH
          SHORTER THAN THE MINIMUM RECORDING LENGTH

# FIG. 3

START ~10

SET VACANT REGION UNSUITABLE FOR
SEAMLESS RECORDING TO RECORDING ~11
PROHIBITING REGION

SEAMLESS
RECORDING ~12

END ~13

# FIG. 4a

| START ADDRESS | REGION LENGTH |
|---|---|
| SA5-1 | DL5-1 |
| SA7-1 | DL7-1 |
| SA5-2 | DL5-2 |
| SA5-3 | DL5-3 |
| SA7-2 | DL7-2 |
| SA5-4 | DL5-4 |

# FIG. 4b

| START ADDRESS | REGION LENGTH |
|---|---|
| SA5-1 | DL5-1 |
| SA8 (SA5-2) | DL8 (DL5-2 - DL9) |
| SA5-3 | DL5-3 |
| SA5-4 | DL5-4 |

# FIG. 5

RECORDING SYSTEM ~17

RE-PRODUCING SYSTEM ~2

INFORMATION ABOUT VACANT REGION AFTER CONVERSION

INFORMATION ABOUT VACANT REGION

CONVERSION ~16

INFORMATION ABOUT ZONE BOUNDARY ~14

MINIMUM RECORDING LENGTH ~15

RECORDING MEDIUM ~1

# FIG. 6

| TAG | NUMBER OF BITS | NUMBER OF BYTES | 0 0 1 1 1 1 1 0 0 0 0 1 1 1 0 0 ... |
|-----|-----|-----|-----|

19  20  21                           22

~18

# FIG. 7

```
        START          ~10
          |
          v
SET VACANT REGION UNSUITABLE FOR
SEAMLESS RECORDING TO RECORDING    ~11
PROHIBITING REGION
          |
          v
      SEAMLESS          ~12
      RECORDING
          |
          v
RESET THE RECORDING PROHIBITING    ~23
REGION TO VACANT REGION
          |
          v
        END            ~13
```

# FIG. 8a

THERE IS NO
SETTING CHANGE

THERE IS A
SETTING CHANGE

0 0 0 0 0 0 0 0 0 0 0 1 1 1 0 0 ...

# FIG. 8b

| START ADDRESS | REGION LENGTH |
|---|---|
| SA7-1 | DL7-1 |
| SA9 | DL9 (DL5-2 - DL8) |
| SA7-2 | DL7-2 |

# FIG. 9

FROM OTHER ZONE

TO OTHER ZONE

24-1  6-6  25  6-7  24-2  6-8  26  6-9  24-3

ZONE

6-6~6-9 : REGION USED BY OTHER DATA

24-1~24-3 : VACANT REGION HAVING A LENGTH NOT SHORTER THAN THE FIRST MINIMUM RECORDING LENGTH AND SHORTER THAN THE SECOND MINIMUM RECORDING LENGTH

25 : VACANT REGION SHORTER THAN THE FIRST MINIMUM RECORDING LENGTH

26 : VACANT REGION NOT SHORTER THAN THE SECOND MINIMUM RECORDING LENGTH

# FIG. 10

SET INITIAL VALUE OF TARGET ZONE ~ 27

YES — THE TARGET ZONE LAST ZONE ? ~ 28

↓ NO

ANY VACANT REGION HAVING A LENGTH EQUAL TO OR LONGER THAN SECOND MINIMUM RECORDING LENGTH PRESENT ? ~ 29

NO →

SET ALL VACANT REGIONS WITHIN TARGET ZONE TO RECORDING PROHIBITING REGION ~ 31

↓ YES

SET VACANT REGION PLACED AFTER VACANT REGION LAST POSITIONED WITHIN TARGET ZONE AND HAVING LENGTH EQUAL TO OR LONGER THAN SECOND MINIMUM RECORDING LENGTH, TO RECORDING PROHIBITING REGION ~ 30

SET VACANT REGION HAVING LENGTH SHORTER THAN FIRST MINIMUM RECORDING LENGTH, TO RECORDING PROHIBITING REGION ~ 32

YES — TARGET ZONE THE LAST ZONE ? ~ 33

↓ NO

SET NEXT ZONE TO TARGET ZONE ~ 34

~ 11